# EUROPÄISCHE PATENTSCHRIFT

(11) **EP 2 525 453 B1**
(45) Veröffentlichungstag und Bekanntmachung des Hinweises auf die Patenterteilung: **25.07.2018**
(21) Anmeldenummer: 11166517.0
(22) Anmeldetag: 18.05.2011
(51) Int. Cl.: H02B 1/36, H01H 71/08

(54) **Parameterabgleich eines Einschubmoduls einer elektrischen Niederspannungs-Schaltanlage**
Parameter adjustment of an insertion module of an electric low voltage switching assembly
Egalisation de paramètre d'un module d'introduction d'une installation de commutation à basse tension électrique

(43) Veröffentlichungstag der Anmeldung: 21.11.2012
(73) Patentinhaber: Siemens Aktiengesellschaft, 80333 München (DE)
(72) Erfinder: Bömoser, Stefan, 91522 Ansbach (DE); Prölß, Manfred, 92263 Ebermannsdorf (DE)

(56) Entgegenhaltungen:
- EP-A1- 2 031 626
- WO-A1-98/44610
- WO-A1-2004/088928
- WO-A1-2006/105879
- DE-A1- 19 960 870

## Beschreibung

Die vorliegende Erfindung betrifft ein Einschubmodul einer elektrischen Niederspannungs-Schaltanlage, wobei das Einschubmodul ein parametrierbares Steuergerät für einen elektrischen Verbraucher enthält. Darüber hinaus betrifft die Erfindung ein Verfahren zum Betrieb einer elektrischen Niederspannungs-Schaltanlage.
Aus dem Stand der Technik sind Schaltanlagen in Einschubtechnik bekannt. Diese weisen für die einzelnen Abgänge Einschübe (Einschubmodule) auf, welche die entsprechenden Schutz- und Steuergeräte für angeschlossene Verbraucher enthalten. Diese Schutz- und Steuergeräte sind zunehmend in einem parametrierbaren ("intelligenten") Gerät (z.B. SIMOCODE der Firma Siemens) integriert, welches zugleich eine Kommunikationsschnittstelle zu einem übergeordneten Steuerungssystem aufweist. Die Geräte kommunizieren über ein Feldbus-System, wie beispielsweise PROFIBUS, oder ein anderes, vorzugsweise nach dem Industrial Ethernet-Standard arbeitenden Kommunikationsnetzwerk, wie beispielsweise PROFINET, und werden innerhalb dieses Systems bzw. Netzwerkes über eine eineindeutige Adresse identifiziert. Diese Kommunikationsadresse wird in Form eines Parameters z.B. mit Hilfe einer Software direkt in dem Einschubmodul eingestellt. Derartige Einschubmodule sind beispielsweise aus der WO 2004/088928 A1 oder DE 199 60 870 A1 auch zu entnehmen.

Die Parameter und somit auch die Adresse werden im Einschubmodul selbst gespeichert. Hierzu dient entweder eine austauschbare Speichereinrichtung, die als Ladespeicher zusätzlich zu dem eigentlichen Gerätespeicher des Einschubmoduls vorgesehen ist, bspw. in Form eines Speicherbausteins, einer Speicherkarte oder dergleichen, oder aber die Parametrisierung des Einschubmodul erfolgt mittels eines Programmiergeräts über eine Software bzw. mit Hilfe eines sogenannten Adressiersteckers.

Wird der das Einschubmodul enthaltene Einschub innerhalb der gleichen Schaltanlage und des gleichen Feldbussystems in einem anderen Einschubschacht, d. h. bei einem anderen angeschlossenen Verbraucher platziert, so wird dies von dem übergeordneten Steuerungssystem nicht erkannt. Ein Wechsel der Einbauposition des Einschubes bleibt daher unberücksichtigt. Bei einer Ansteuerung des Einschubmoduls kann es zum Zuschalten des falschen Verbrauchers und somit zu gefährlichen Situationen kommen.

Da das Einschubmodul mittels des Feldbussystems mit anderen Geräten (z.B. einem elektrischen Verbraucher) kommunizieren kann, kann es vorkommen, dass beispielsweise während des laufenden Betriebs der Niederspannungs-Schaltanlage Parameter des Einschubmoduls und somit die in dem Steuergerät des Einschubmoduls hinterlegten Parameter geändert werden. Kommt es nun zu einem Austausch des Einschubmoduls, so kann es vorkommen, dass das neue Einschubmodul mit den alten Parameterdaten, welche bei der "Erstinstallation" verwendet wurden, parametriert wird und nicht mit den geänderten Parameterdaten des alten Einschubmodul. Eine Aktualisierung der Parameter des Einschubmoduls über das Feldbus-System kann somit unberücksichtigt bleiben.

Eine aufwändige manuelle Kontrolle ist notwendig, um bei dem Tausch eines Einschubmoduls sicherzustellen, dass auch tatsächlich die richtige Parametrierung und insbesondere die richtige Adresse eingestellt sind.

Nachteilig bei der bisher verwendeten Lösung ist es insbesondere, dass eine Sicherstellung der letzten im Einschubmodul hinterlegten Parameter erschwert ist und somit insbesondere die Gefahr eine Falschparametrierung eines neunen Einschubmoduls vorliegt.

Eine Aufgabe der vorliegenden Erfindung ist es die Betriebssicherheit einer Niederspannungs-Schaltanlage zu erhöhen. Insbesondere soll das Einschubmodul verbessert werden.
Diese Aufgabe wird durch ein Einschubmodul nach Anspruch 1, sowie durch ein Verfahren nach Anspruch 3, d.h. durch ein Verfahren zum Betrieb einer elektrischen Niederspannungs-Schaltanlage (1) nach Anspruch 2, gelöst, wobei während einer Aktivierung des Einschubmoduls in dem Einschubschacht der Niederspannungsanlage ein automatisches Übertragen von Parametern der Speichereinrichtung in das Einschubmodul erfolgt und die übertragenen Parameter in dem Einschubmodul abgespeichert werden.
Vorteilhafte Weiterbildungen der Erfindung sind in den abhängigen Ansprüchen angegeben.

Die elektrische Niederspannungs-Schaltanlage umfasst mindestens einen Einschubschacht für das Einschubmodul. Der mindestens eine Einschubschacht ist mit einer Speichereinrichtung verbunden. In der Speichereinrichtung sind Parameter (Konfigurationsdaten und/oder Betriebsparameter) hinterlegt, mit welchen eine Parametrierung eines Einschubmoduls erfolgen kann. Umfasst die Niederspannungs-Schaltanlage mehrere Einschubschächte, so ist vorzugsweise jedem Einschubschacht eine Speichereinrichtung mit jeweils hinterlegten Parametern zugeordnet. Ein Einschubschacht kann somit jeweils ein Einschubmodul aufnehmen und ist mit einer Speichereinrichtung, in welche Parameter hinterlegt sind, verbunden.

Erfolgt nun eine Aktivierung eines Einschubmoduls in einem Einschubschacht der elektrischen Niederspannungs-Schaltanlage, so erfolgt ein automatisches Übertragen von Parametern der Speichereinrichtung, welche dem verwendeten Einschubschacht zugeordnet ist, in das Einschubmodul. Hierbei werden insbesondere Parameter der Speichereinrichtung in das Steuergerät des Einschubmoduls übertragen. Diese übertragenen Parameter werden in dem Einschubmodul bzw. dessen Steuergerät abgespeichert. Das Einschubmodul wurde somit durch die Niederspannungs-Schaltanlage und insbesondere dessen Speichereinrichtung parametriert.

Das Aktivieren des Einschubmoduls ist beispielsweise ein Stecken des Einschubmoduls in einem Einschubschacht der Niederspannungs-Schaltanlage oder ein Einschalten der Versorgungsspannung des im Einschubschacht gesteckten Einschubmoduls. Vorzugsweise ist unter dem Aktivieren des Einschubmoduls die Phase der Übertragung der für das Einschubmodul in der Schaltanlage verwendeten Parameter (insbesondere der Adresse) in das Einschubmodul zu verstehen.

Über entsprechende Kommunikationsschnittstellen des Einschubmoduls und der Niederspannungs-Schaltanlage kann ein Parameteraustausch und somit ein Datenaustausch zwischen der Niederspannungs-Schaltanlage und dem Einschubmodul erfolgen.

Bei den Parametern handelt es sich vorzugsweise um Konfigurationsdaten und/oder Betriebsparameter. Vorzugsweise werden mittels der Parameter von der Speichereinrichtung Adressierungsdaten an das Einschubmodul, insbesondere an dessen Steuergerät, übertragen. Mittels dieser Adressierungsdaten kann sichergestellt werden, dass das Einschubmodul immer die für diesen Einschubschacht vorgesehene Adresse (z.B. Bus-Adresse) zugewiesen bekommt, so dass eine korrekte Kommunikation mit dem Einschubmodul erfolgen kann. Durch das automatische Übertragen der Parameter der Speichereinrichtung bei der Aktivierung des Einschubmoduls und das Abspeichern dieser Parameter im Einschubmodul kann eine sichere Zuordnung des Einschubmoduls zu einem Einschubschacht erfolgen, so dass auf sichere Weise die korrekten Parameter an das Einschubmodul bzw. dessen Geräte übertragen und letztendlich abgespeichert werden können. Erfindungsgemäß findet eine automatische Parametrierung des Einschubmoduls während der Aktivierung des Einschubmoduls im Einschubschacht (z.B. Platzierung des Einschubmoduls in dem Einschubschacht) statt. Erfindungsgemäß ist das Einschubmodul derart ausgebildet ist, dass bei einer anschließenden Änderung der im Einschubmodul hinterlegten Parameter des Einschubmoduls ein vorzugsweise automatischer Abgleich der Parameter des Einschubmoduls mit den Parametern der Speichereinrichtung erfolgt.
Die nach der Aktivierung des Einschubmoduls im Einschubmodul hinterlegten/abgespeicherten Parameter (welche von der Speichereinrichtung stammen) können während des Betriebs des Einschubmoduls geändert werden. Die Änderung der Parametrierung im Einschubmodul kann beispielsweise durch einen Vor-Ort PC, ein Speichermodul oder durch den Leitrechner veranlasst werden. Folglich kann beispielsweise dem Einschubmodul eine geänderte Anlaufparametrierung zugewiesen werden. Im Einschubmodul liegen somit gegenüber der Speichereinrichtung unterschiedliche Parameter vor.
Eine korrekte und sichere Ablage der aktuellen Parameter des Einschubmoduls ist jedoch essentiell um eine sichere fehlerfreie Schaltanlage zu ermöglichen. Wird nun beispielsweise das Einschubmodul ausgetauscht, so wird das neue Einschubmodul lediglich mit den veralteten Parameterdaten seitens der Niederspannungs-Schaltanlage versehen. Dank des Abgleichs der Parameter des Einschubmoduls mit der Speichereinrichtung der Schaltanlage kann jedoch nun gewährleistet werden, dass ebenso in der Speichereinrichtung die aktuellen Parameter hinterlegt sind, so dass ein sicherer Betrieb des Systems gewährleistet werden kann.
Bei einer Änderung der Parameter im Einschubmodul erfolgt insbesondere ein Abgleich der im Einschubmodul hinterlegten Parameter mit den Parametern der Speichereinrichtung. Hierbei werden jeweils die korrespondierenden Parameter des Einschubmoduls und der Speichereinrichtung betrachtet. Die neuen (geänderten) Parameter im Einschubmodul werden somit in der Speichereinrichtung aktualisiert, so dass auch in der Speichereinrichtung die neuen Parameter des Einschubmoduls hinterlegt sind.
Die Parameter des Steuergerätes werden vorzugsweise bei jeder Parametrierung automatisch mit den Parametern der Speichereinrichtung abgeglichen bzw. als Kopie in der Speichereinrichtung hinterlegt.
In einer weiteren vorteilhaften Ausführungsform der Erfindung umfasst eine elektrische Niederspannungs-Schaltanlage das Einschubmodul, wenigstens einen Einschubschacht für das Einschubmodul und eine dem Einschubschacht zugeordnete Speichereinrichtung, wobei die elektrische Niederspannungs-Schaltanlage derart ausgebildet ist, dass bei dem aktivieren des Einschubmoduls in dem Einschubschacht ein automatisches Übertragen von Parametern der Speichereinrichtung in das Einschubmodul und ein Abspeichern der übertragenen Parameter in dem Einschubmodul erfolgt.
Eine derartige elektrischen Niederspannungs-Schaltanlage weist die Aufbauart Einschubtechnik auf. Die Komponente, welche den Einschubschacht umfasst ist hierbei mit der Speichereinrichtung verbunden bzw. umfasst diese. Erfindungsgemäß ist die elektrische Niederspannungs-Schaltanlage derart ausgebildet, dass bei einer anschließenden Änderung der Parameter des Einschubmoduls ein automatischer Abgleich der Parameter des Einschubmoduls mit den Parametern der Speichereinrichtung erfolgt.

Es werden somit zunächst Parameter von der Niederspannungs-schaltanlage und insbesondere von deren Speichereinrichtung an das Einschubmodul und insbesondere an dessen Steuergerät übertragen und im Einschubmodul bzw. dessen Steuergerät abgespeichert. Kommt es nun zu einer Änderung der Parameter in dem Einschubmodul, z.B. mittels einer Kommunikation zwischen einem Rechner und dem Einschubmodul, so liegen im Einschubmodul gegenüber der Speichereinrichtung andere Parameter (aktuellere Parameter) vor. Dank des Abgleichs der Parameter des Einschubmoduls mit den Parametern der Speichereinrichtung können die geänderten Parameter ebenso in die Speichereinrichtung geschrieben werden, so dass die aktuellen Parameter sowohl in dem Einschubmodul als auch in der Speichereinrichtung der Niederspannungs-Schaltanlage hinterlegt sind. Auf diese Weise kann sichergestellt werden, dass in beiden Geräten (Einschubmodul und die Komponente der Niederspannungs-Schaltanlage, welche den Einschubschacht für das Einschubmodul aufweist) stets die aktuellsten Parameter hinsichtlich des Einschubmoduls hinterlegt sind.

Das Einschubmodul ist somit vorzugsweise derart ausgebildet, dass es sowohl mit der Speichereinrichtung als auch mit einem externen Leittechnikrechner oder Vor-Ort PC kommunizieren kann und Parameter von diesen abspeichern kann.

Die Übertragung der Parameter von der Speichereinrichtung an das Einschubmodul wird insbesondere durch ein Gerät des Einschubmoduls veranlasst. Zum Beispiel kann das Einschubmodul als Steuergerät das Produkt "SIMOCODE" der Firma Siemens umfassen, welches den Parameteraustausch veranlasst.

Ein Vorteil einer derartigen Niederspannungs-Schaltanlage besteht darin, dass die Speichereinrichtung nicht mehr dem beweglichen Teil der Schaltanlage (dem Einschubmodul) sondern stattdessen dem feststehenden Teil der Schaltanlage, nämlich dem Einschubschacht, d.h. dem Einbauplatz des Einschubmoduls, zugeordnet ist. Damit wird eine feststehende Zuordnung gültiger Parameter zu dem Einschubschacht und damit auch zu dem jeweils angeschlossenen elektrischen Verbraucher erreicht. Somit kann jedes passende Einschubmodul für diesen Verbraucher in diesem Einschubschacht platziert werden.

Vorzugsweise erfolgt die Zuordnung der Speichereinrichtung dadurch, dass diese in dem oder an dem Einschubschacht angeordnet ist. Mit anderen Worten werden die Parameter (Identifikationsdaten des Steuergerätes bzw. des zu steuernden Verbrauchers) direkt am Einbauplatz des Einschubmoduls für diesen Verbraucher platziert. Ist die Speichereinrichtung nicht unmittelbar in dem Einschubschacht angeordnet, dann befindet sie sich vorzugsweise in unmittelbarer räumlicher Nähe zu dem Einschubschacht, insbesondere in demjenigen Kabelanschlussraum, der dem Einschubschacht zugeordnet ist oder in einem anderen dem Einschubschacht zugeordneten Funktionsraum der Schaltanlage.

Besonders vorteilhaft anwendbar ist das System bei sog. "intelligenten" Geräten, die über eine Kommunikationseinrichtung für eine Kommunikation mit einer übergeordneten Kommunikationseinrichtung der Schaltanlage verfügen. Bei den gespeicherten Parametern handelt es sich dann vorteilhafterweise entweder um Adressdaten, wie sie für die Kommunikation verwendet werden, beispielsweise um Feldbus- oder Netzwerk-Adressdaten. Anstelle dieser Adressdaten oder aber zusätzlich hierzu kann die Speichereinrichtung weitere Identifikationsdaten enthalten, wie beispielsweise eine Bezeichnung des elektrischen Verbrauchers, eine Angabe zu dem Einschubschacht, beispielsweise zu der Position des Einbauschachtes innerhalb des Schaltanlagenfeldes, eine Angabe zu der Typical-Variante des Einschubmoduls usw. Mit diesen zusätzlichen Identifikationsdaten lässt sich der Abgang des Feldbussystems bzw. des Netzwerkes unter bestimmten Umständen ebenso eindeutig identifizieren, wie durch die Verwendung einer Kommunikationsadresse.

Werden in der Speichereinrichtung auch Betriebsparameter, also insbesondere funktionale Parameter und Schutzeinstellungen, gespeichert, können zudem auch Falscheinstellungen und Fehlparametrierungen des Steuergerätes verhindert werden.

Die Parametrierung bzw. Übernahme der Identifikationsparameter erfolgt automatisch während der Aktivierung des Einschubmoduls in der Schaltanlage. Eine anschließende Überprüfung der richtigen Adressierung ist nicht mehr notwendig. Jedes "gesteckte" Einschubmodul ist automatisch mit der richtigen Adresse versehen, da das Einschubmodul bei seiner Aktivierung die Parameter aus der Schaltanlage (Niederspannungs-Schaltanlage) übernimmt.

Somit wird eine Verwechslung oder Falschplatzierung von Einschubmodulen sicher verhindert. Zu einem fehlerhaften Zuschalten eines falschen Verbrauchers und somit zu gefährlichen Situationen kann es nicht mehr kommen.

Die Identifizierung des Steuergerätes an einem Kommunikationssystem, beispielsweise an einem Bussystem, erfolgt durch das Steuergerät selbst, nämlich durch Aktivieren des Einschubmoduls im Einschubfach (z.B. durch das Einschieben des entsprechenden Einschubmoduls in einen Einschubschacht). Es ist keine Zuweisung von Adressdaten usw. "von außen", beispielsweise von einer übergeordneten Steuereinheit, notwendig. Das Identifizieren des Steuergerätes funktioniert mit anderen Worten unabhängig von der Leittechnik.

Unter dem Begriff "Niederspannungs-Schaltanlage" werden Schaltanlagen verstanden, die für einen Betrieb mit Niederspannung, also einen Spannungsbereich bis 1000 Volt, ausgelegt sind.
Unter dem Begriff "Steuergerät" werden Schutzgeräte, Steuergeräte sowie kombinierte Schutz- und Steuergeräte verstanden, wie sie in Schaltanlagen üblicherweise in Verbindung mit elektrischen Verbrauchern angeschlossen und verwendet werden. Unter dem Begriff "Einschubschacht" wird allgemein und unabhängig von dessen konkreter konstruktiver Ausgestaltung der Aufnahme- bzw. Montageort des Einschubmoduls in der Schaltanlage verstanden. Der Einschubschacht kann also ein Halterrahmen oder dergleichen sein.
Unter dem Begriff "Einschubmodul" wird eine aus dem Einschubschacht herausnehmbare, austauschbare Funktionseinheit des Abgangs verstanden. Dabei kann es sich um ein unter Anwendung der Einschubtechnik verwendbares Einschubmodul handeln, welches nach dem Platzieren in dem Einschubschacht und dem sich anschließenden Kontaktieren des Kontaktsatzes über eine elektrische Verbindung zu dem feststehenden Teil der Schaltanlage verfügt. Alternativ dazu handelt es sich bei der Funktionseinheit um eine andere, austauschbare Funktionseinheit, beispielsweise um ein unter Anwendung der Stecktechnik verwendbares Steckmodul, bei welchem der Kontaktsatz bei dem Platzieren automatisch kontaktiert und damit das Steckmodul aktiviert wird.
Die zum Einsatz kommenden Kommunikationseinrichtungen können zur Herstellung von kabelgebundenen, optischen, funkbasierten oder anderen Verbindungen ausgebildet sein. Erfindungsgemäß umfasst das Verfahren zum Betrieb der elektrischen Niederspannungs-Schaltanlage folgende Schritte:
- während einer Aktivierung des Einschubmoduls in dem Einschubschacht der Niederspannungsanlage erfolgt ein automatisches Übertragen von Parametern der Speichereinrichtung in das Einschubmodul,
- die übertragenen Parameter werden in dem Einschubmodul abgespeichert,
- bei einer anschließenden Änderung der Parameter des Einschubmoduls erfolgt ein automatischer Abgleich der Parameter des Einschubmoduls mit den Parametern der Speichereinrichtung.

Die anschließende Änderung kann z.B. durch eine Anlaufparametrierung oder durch eine Parametrierung des Einschubmoduls mittels einer Parametriersoftware erfolgen.

Bei dem Abgleich der Parameter des Einschubmoduls mit den Parametern der Speichereinrichtung werden insbesondere die Parameter der Speichereinrichtung, welche mit den aktualisierten Parametern des Einschubmoduls korrespondieren, aktualisiert. Hierbei werden insbesondere die betroffenen Parameter der Speichereinrichtung mit den aktualisierten Parametern des Einschubmoduls überschrieben.

In einer vorteilhaften Ausführungsform der Erfindung erfolgt das Übertragen der Parameter (Daten) der Speichereinrichtung bei jedem Aktivieren des Einschubmoduls.

D.h. jedes Mal, wenn das mit der Niederspannungsschaltanlage verbunden Einschubmodul an Spannung gelegt wird, erfolgt ein automatisches Abspeichern der Parameter der Speichereinrichtung in dem Einschubmodul.

In einer weiteren vorteilhaften Ausführungsform der Erfindung weist das Steuergerät des Einschubmoduls und/oder die Speichereinrichtung der Niederspannungs-Schaltanlage einen Schreibschutz auf. Hierdurch kann eine versehentliche Änderung der Parameter verhindert werden. Vorzugsweise können mittels des Schreibschutzes alle Parameter des Steuergerätes und/oder der Speichereinrichtung und/oder nur einen Teilbereicht der Parameter geschützt werden. Es können somit beispielsweise Parameter zum Abgleich freigegeben werden, wohingegen andere Parameter einen Schreibschutz aufweisen, so dass diese nicht abgeglichen werden können.

Liegt nun beispielsweise ein Schreibschutz für alle Parameter das Steuergeräts des Einschubmoduls vor und seitens eines externen Leittechnikrechners oder Vor-Ort PCs wird versucht, die Parametrierung im Einschubmodul zu verändern, so wird dies dank des aktivierten Schreibschutzes abgelehnt. Die Parameter des Steuergeräts werden somit nicht geändert und ein Abgleich zwischen den Parametern des Steuergerätes und der Speichereinrichtung der Schaltanlage entfällt. Die Parameter im Einschubmodul sind somit weiterhin identisch mit den Parametern der zugehörigen Speichereinrichtung der Niederspannungs-Schaltanlage.

Ferner kann durch den Schreibschutz beispielsweise ein versehentliches Überschreiben der Daten auf der Speichereinrichtung verhindert werden.

Die im Zusammenhang mit der Niederspannungs-Schaltanlage erläuterten Vorteile und Ausgestaltungen gelten sinngemäß auch für das korrespondierende Einschubmodul sowie für das erfindungsgemäße Verfahren und umgekehrt.

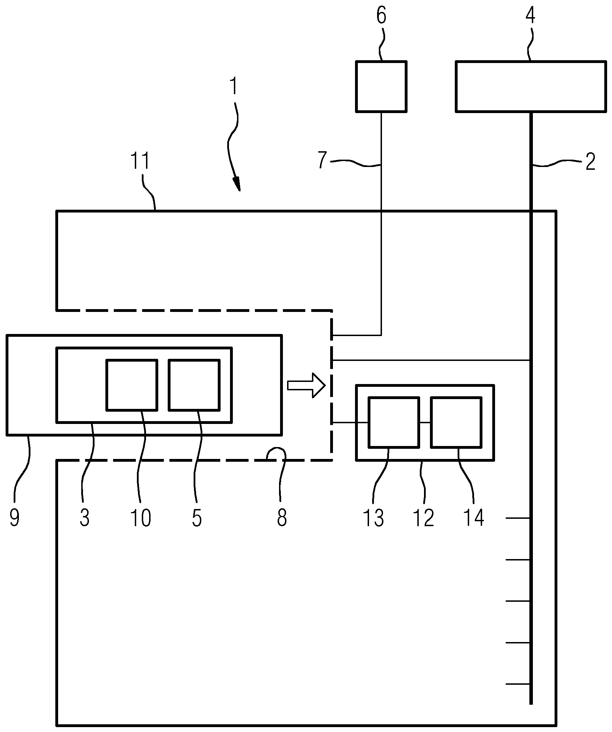

Ein Ausführungsbeispiel der Erfindung wird nachfolgend anhand der Zeichnung näher erläutert.

Die Figur zeigt eine schematische Darstellung einer Schaltanlage.

Die elektrische Niederspannungs-Schaltanlage 1 weist eine Mehrzahl von über ein Bussystem 2 miteinander verbundenen Steuergeräten 3, beispielsweise Antriebsteuergeräte, auf. Bei dem Bussystem 2 handelt es sich um einen in der Automatisierungs- und Fertigungstechnik weit verbreiteten standardisierten Feldbus, wie PROFIBUS.

Zur Anbindung an eine übergeordnete Steuerungsebene, beispielsweise die Steuerzentrale der Schaltanlage 1, ist die Schaltanlage 1 dabei über das Bussystem 2 mit einem externen Leittechnikrechner 4 als Busmaster zur Steuerung der als Slaves dienenden Steuergeräte 3 verbunden. Zwischen dem Leittechnikrechner 4 und den jeweiligen Steuergeräten 3 werden Prozessdaten ausgetauscht. Bei den Prozessdaten handelt es sich insbesondere um Daten zum Einstellen, Steuern, Regeln und/oder Überwachen der Steuergeräte 3. Sie können auch Prozessparameter oder Konfigurationsdaten umfassen, um entsprechende Änderungen im betrieblichen Verhalten der Steuergeräte 3 zu bewirken.

Die Steuergeräte 3 sind parametrierbar und verfügen für die Kommunikation mit der übergeordneten Steuerungsebene, hier dem Leittechnikrechner 4, über das Bussystem 2 über eine Kommunikationsschnittstelle 5, so dass sie auch als "intelligente" Geräte bezeichnet werden. Die Kommunikationsschnittstelle 5 jedes Steuergerätes 3 umfasst beispielsweise eine Sende- und/oder Empfangseinheit. Je nach verwendeter Übertragungstechnologie können dabei die unterschiedlichsten Komponenten zum Einsatz kommen.

Die Steuergeräte 3 sind im montierten ("gesteckten") Zustand mit außerhalb der Schaltanlage 1 angeordneten elektrischen Verbrauchern 6 verbunden, die über Anschlussleitungen 7 fest mit den jeweiligen Einschubschächten 8 der Schaltanlage 1 verbunden sind. Die Steuergeräte 3 dienen beispielsweise dazu, Motoren in industriellen Prozessen zu schalten und zu schützen. Die Steuergeräte 3 sind in der sogenannten "Einschubtechnik" in Einschubmodulen 9 (Einschüben) untergebracht. Die Einschubmodule 9 lassen sich nach Art von Schubkästen in entsprechend vorgesehene Einschubschächte 8 eines Schaltschrankes 11 positionieren.

Der Übersichtlichkeit halber ist in der Figur lediglich ein einziges Einschubmodul 9 mit einem Steuergerät 3 und ein einziger Einschubschacht 8 des Schaltschrankes 11 dargestellt.

Solange ein Steuergerät 3 nicht parametriert ist, also zumindest eine Busadresse zugewiesen bekommen hat, funktioniert das in einem Einschubschacht 8 platzierte Einschubmodul 9 nicht oder nur eingeschränkt. Erst die Zuweisung einer eineindeutigen Kommunikationsadresse ermöglicht die Kommunikation innerhalb des Bussystems 2.

Die Schaltanlage 1 umfasst eine Mehrzahl von Speichereinrichtungen 12 zum Speichern von Parametern (Konfigurationsdaten und/oder Betriebsparametern) der Steuergeräte 3 bzw. der elektrischen Verbraucher 6. Diese Speichereinrichtungen 12 sind nicht in den Einschubmodulen 9 integriert, sondern in den Einschubschächten 8 platziert. Mit anderen Worten weisen nicht die Einschubmodule 9, sondern die Einschubschächte 8 die Speichereinrichtungen 12 auf. Dabei ist jedem Einschubschacht 8 genau eine Speichereinrichtung 12 zugeordnet. Alternativ zu dieser Ausführungsform können die Speichereinrichtungen 12 auch in den Einschubschächten 8 zugeordneten Funktionsräumen (nicht dargestellt) der Schaltanlage 1 angeordnet sein. In der Figur ist die Speichereinrichtung 12 aus Gründen der Übersichtlichkeit nicht in dem Einschubschacht 8, sondern an den Einschubschacht angrenzend abgebildet.

Die Speichereinrichtung 12 umfasst neben dem eigentlichen Speicherbaustein 14 eine Kommunikationsschnittstelle 13. Bei dem Speicherbaustein 14 handelt es sich beispielsweise um eine Speicherkarte, wie sie beispielsweise auch in digitalen Kameras verwendet wird.

Die Kommunikationsschnittstelle 13 dient der Kommunikation mit dem Steuergerät 3. Zu diesem Zweck verfügt das Steuergerät 3 zusätzlich zu der Kommunikationsschnittstelle 5 für die Kommunikation mit der Leittechnik über eine weitere Kommunikationsschnittstelle 10 für die Kommunikation mit der Speichereinrichtung 12.

Sowohl die Kommunikationsschnittstelle 13 der Speichereinrichtung 12, als auch die Kommunikationsschnittstelle 10 des Steuergerätes 3 umfassen beispielsweise eine Sende- und/oder Empfangseinheit, wobei wiederum, je nach verwendeter Übertragungstechnologie, die unterschiedlichsten Komponenten zum Einsatz kommen können. Wichtig ist, dass die dem Einschubschacht 8 zugeordnete Kommunikationsschnittstelle 13 der Speichereinrichtung 12 mit der Kommunikationsschnittstelle 10 des Steuergerätes 3 kommunizieren und die notwendigen Daten (insbesondere Parameter) übertragen bzw. austauschen kann. Dabei kann es sich um eine Datenübertragung von der Speichereinrichtung 12 zu dem Steuergerät 3, aber auch um eine Datenübertragung von dem Steuergerät 3 zu der Speichereinrichtung 12 handeln.

Die Kommunikation des Steuergerätes 3 mit dem Leittechnikrechner 4 über die Kommunikationsschnittstelle 5 ist dabei unabhängig von der Kommunikation des Steuergerätes 3 mit de Speichereinrichtung 12 über die Kommunikationsschnittstelle 10. Es erfolgt zudem keine direkte Kommunikation zwischen der Speichereinrichtung 12 und dem Leittechnikrechner 4, sondern eine solche Kommunikation erfolgt stets über das Steuergerät 3.

Die in der Speichereinrichtung 12 gespeicherten Parameter, insbesondere Konfigurationsdaten und/oder Betriebsparameter, umfassen nicht nur Betriebsparameter, insbesondere funktionale Parameter und Schutzeinstellungen, sondern auch für die Kommunikation relevante Informationen, insbesondere Adressdaten.

Außerdem sind in der Speichereinrichtung 12 als Parameter weitere Identifikationsparameter gespeichert, die neben oder zusätzlich zu der Adresse eine Identifizierung des Steuergerätes 3 ermöglichen, z.B. Angaben darüber, in welchem Feld der Schaltanlage 1 bzw. an welcher Einbauplatzposition das jeweilige Einschubmodul 9 platziert ist. Diese Art von zusätzlichen Informationen dient beispielsweise dazu, Angaben über das Steuergerät 3 außen stehenden Dritten, beispielsweise Service-Techniker, über die Leittechnik sichtbar zu machen, damit diese eine Bewertung der Busadresse, beispielsweise hinsichtlich ihres Einbauplatzes, vornehmen können. Neben der Einbauplatzposition können das beispielsweise auch die Abgangsbezeichnungen der angeschlossenen elektrischen Verbraucher 6 (z.B. Motoren) sein.

Eine automatische Parametrierung des Einschubmoduls 9 erfolgt vorzugsweise während der Platzierung des Einschubmoduls 9 in dem Einschubschacht 8, also in einem direkten zeitlichen Zusammenhang mit dem Einsteckvorgang. Damit wird sichergestellt, dass die Parametrierung des Steuergerätes 3, insbesondere das Zuordnen einer Busadresse, sowie das Erkennen des Einschubmoduls 9, dessen korrekte Einbindung in das Schaltanlagenfeld und eine sich gegebenenfalls anschließende Freigabe bzw. Nichtfreigabe des Betriebs des Einschubmoduls 9 zeitnah und in jedem Fall vor dem Einschalten des Abgangs erfolgt. Das Einschubmodul 9 wird somit bei seiner Aktivierung im Einschubschacht 8 von der Schaltanlage 1 mit den Parametern der zugehörigen Speichereinrichtung 12 parametriert. Bei einer derartigen Parametrierung werden die Parameter der Speichereinrichtung 12 zum Einschubmodul 9 übertragen und automatisch vom Einschubmodul abgespeichert.

Bei einem Aktivieren des Einschubmoduls 9 im Einschubschacht 8 erfolgt somit ein automatisches Abspeichern der Parameter der Speichereinrichtung 12 in dem Einschubmodul 9, so dass auf diese Weise die korrekte Adressierung und Parametrierung eines intelligenten Steuergerätes 3 bei seinem Anschluss sichergestellt wird.

Nachdem das Einschubmodul 9 nach der Aktivierung von der Speichereinrichtung 12 der Schaltanlage 1 parametriert wurde kann es nun beispielsweise im laufenden Betrieb seitens des Leittechnikrechners 4 mit neuen Parametern versehen werden, so dass die Parameter des Einschubmoduls 9 nicht mit den korrespondierenden Parametern der Speichereinrichtung 13 übereinstimmt. Bei einem Ersetzten des Einschubmoduls 9 mit einem neuen Einschubmodul 9 würde somit das neue Einschubmodul 9 mit den veralteten Parametern der Speichereinrichtung 12 versehen werden. Dank des automatischen Abgleichs der Parameter des Einschubmoduls 9 mit den Parametern der Speichereinrichtung 12 kann sichergestellt werden, dass die Niederspannungs-Schaltanlage ständig den aktuellen Parameterstand hält und es somit zu keiner Fehlparametrierung durch die die Niederspannungs-Schaltanlage selbst kommen kann.

Bei dem Abgleich der Parameter werden entweder lediglich die geänderten Parameter des Einschubmoduls 9 zur Speichereinrichtung 12 übertragen, so dass diese in der Speichereinrichtung 12 aktualisiert werden. Es ist aber auch denkbar, dass bei einer Änderung der Parameter im Einschubmodul 9 ein vollständiges überschreiben der Parameter im Speichermodul 12 erflogt.

Auf diese Weise kann die korrekte Parametrierung eines intelligenten Steuergerätes 3 nach einem Tausch eines Einschubmoduls 9 sichergestellt werden. Die Sicherstellung des neusten Parameterstandes erfolgt vollautomatisch, so dass menschliche Fehler ausgeschlossen werden können.

Dank des Abgleichs der Parameter des Einschubmoduls 9 mit denen der Speichereinrichtung 12 kann somit sichergestellt werden, dass nach einem Wechsel eines Einschubmoduls 9 die Parameter der Speichereinrichtung 12 eines Einschubschachts 8 den aktuellen Parameterstand aufweisen, so dass ein neues Einschubmodul 9 bei seiner Aktivierung in diesem Einschubschacht 8 korrekt parametrieret wird und somit eindeutig identifiziert wird, so dass beispielsweise die richtige Adresse ein gestellt ist und die richtigen Parameter vorliegen.

Die Speichereinrichtung 12 ist nicht im Einschubmodul 9 platziert.

## Patentansprüche

1. Einschubmodul (9) für eine elektrische Niederspannungs-Schaltanlage (1), welche einen Einschubschacht (8) und eine Speichereinrichtung (12) umfasst, wobei das Einschubmodul (9) ein parametrierbares Steuergerät (3) für einen elektrischen Verbraucher (6) enthält,
wobei das Einschubmodul (9) derart ausgebildet ist, dass bei einem Aktivieren des Einschubmoduls (9) im Einschubschacht (8) ein automatisches Abspeichern von Parametern der Speichereinrichtung (12) in dem Einschubmodul (9) erfolgt,
**dadurch gekennzeichnet, dass**
das Einschubmodul (9) derart ausgebildet ist, dass bei einer anschließenden Änderung der Parameter des Einschubmoduls (9) ein Abgleich der Parameter des Einschubmoduls (9) mit den Parametern der Speichereinrichtung (12) erfolgt.

2. Elektrische Niederspannungs-Schaltanlage (1) mit einem Einschubmodul (9) nach Anspruch 1, wenigstens einem Einschubschacht (8) für das Einschubmodul (9) und eine dem Einschubschacht (8) zugeordnete Speichereinrichtung (12), wobei die elektrische Niederspannungs-Schaltanlage (1) derart ausgebildet ist, dass bei dem Aktivieren des Einschubmoduls (9) im Einschubschacht (8) ein automatisches Übertragen von Parametern der Speichereinrichtung (12) in das Einschubmodul (9) und ein Abspeichern der übertragenen Parameter in dem Einschubmodul (9) erfolgt,
**dadurch gekennzeichnet, dass**
die elektrische Niederspannungs-Schaltanlage (1) derart ausgebildet ist, dass bei einer anschließenden Änderung der Parameter des Einschubmoduls (9) ein automatischer Abgleich der Parameter des Einschubmoduls (9) mit den Parametern der Speichereinrichtung (12) erfolgt.

3. Verfahren zum Betrieb einer elektrischen Niederspannungs-Schaltanlage (1) nach Anspruch 2, wobei während einer Aktivierung des Einschubmoduls (9) im Einschubschacht (8) der Niederspannungsanlage (1) ein automatisches Übertragen von Parametern der Speichereinrichtung (12) in das Einschubmodul (9) erfolgt und die übertragenen Parameter in dem Einschubmodul (9) abgespeichert werden,
**dadurch gekennzeichnet, dass**
bei einer anschließenden Änderung der Parameter des Einschubmoduls (9) ein automatischer Abgleich der Parameter des Einschubmoduls (9) mit den Parametern der Speichereinrichtung (12) erfolgt.

## Claims

1. Insertion module (9) for an electrical low voltage switching assembly (1), which comprises an insertion slot (8) and a storage facility (12), wherein the insertion module (9) contains a parameterisable control device (3) for an electrical consumer (6),
wherein the insertion module (9) is embodied such that, when the insertion module (9) is activated in the insertion slot (8), an automatic saving of parameters of the storage facility (12) in the insertion module (9) takes place,
**characterised in that**
the insertion module (9) is embodied such that, when the parameters of the insertion module (9) are subsequently changed, a comparison of the parameters of the insertion module (9) against the parameters of the storage facility (12) takes place.

2. Electrical low-voltage switching assembly (1) with an insertion module (9) according to claim 1, at least one insertion slot (8) for the insertion module (9) and a storage facility (12) assigned to the insertion slot (8), wherein the electrical low-voltage switching assembly (1) is embodied such that, when the insertion module (9) is activated in the insertion slot (8), an automatic transfer of parameters of the storage facility (12) into the insertion module (9) and a saving of the transferred parameters in the insertion module (9) take place,
**characterised in that**
the electrical low-voltage switching assembly (1) is embodied such that, when the parameters of the insertion module (9) are subsequently changed, an automatic comparison of the parameters of the insertion module (9) against the parameters of the storage facility (12) takes place.

3. Method for operating an electrical low-voltage switching assembly (1) according to claim 2, wherein, during an activation of the insertion module (9) in the insertion slot (8) of the low-voltage assembly (1), an automatic transfer of parameters of the storage facility (12) into the insertion module (9) takes place and the transferred parameters are saved in the insertion module (9),
**characterised in that**,
when the parameters of the insertion module (9) are subsequently changed, an automatic comparison of the parameters of the insertion module (9) against the parameters of the storage facility (12) takes place.

## Revendications

1. Module (9) enfichable pour une installation (1) de distribution électrique à basse tension, qui comprend un puits (8) d'enfichage et un dispositif (12) de mémorisation, le module (9) enfichable contenant un appareil (3) de commande paramétrable d'un consommateur (6) électrique,
dans lequel le module (9) enfichable est constitué de manière à ce que, lors de l'activation du module (9) enfichable dans le puits (8) d'enfichage, il se produise une mémorisation automatique de paramètres du dispositif (12) de mémorisation dans le module (9) enfichable,
**caractérisé en ce que**
le module (9) enfichable est constitué de manière à ce que, lorsqu'il se produit une modification ensuite des paramètres du module (9) enfichable, il s'effectue une égalisation des paramètres du module (9) enfichable aux paramètres du dispositif (12) de mémorisation.

2. Installation (1) de distribution électrique à basse tension, comprenant un module (9) enfichable suivant la revendication 1, au moins un puits (8) d'enfichage du module (9) enfichable et un dispositif (12) de mémorisation associé au puits (8) d'enfichage, dans lequel l'installation (1) de distribution électrique à basse tension est constitué de manière à ce que, lors de l'activation du module (9) enfichable dans le puits (8) d'enfichage, il se produise une transmission automatique des paramètres du dispositif (12) de mémorisation au module (9) enfichable et une mémorisation des paramètres transmis dans le module (9) enfichable,
**caractérisée en ce que**
l'installation (1) de distribution électrique à basse tension est constituée de manière à ce que, si il se produit une modification ensuite des paramètres du module (9) enfichable, il se produise une égalisation automatique des paramètres du module (9) enfichable aux paramètres du dispositif (12) de mémorisation.

3. Procédé pour faire fonctionner une installation (1) de distribution électrique à basse tension suivant la revendication 2, dans lequel, pendant une activation du module (9) enfichable dans le puits (8) d'enfichage de l'installation (1) à basse tension, il se produit une transmission automatique de paramètres du dispositif (12) de mémorisation au module (9) enfichable et les paramètres transmis sont mémorisés dans le module (9) enfichable,
**caractérisé en ce que**
s'il se produit une modification ensuite des paramètres du module (9) enfichable, il se produit une égalisation automatique des paramètres du module (9) enfichable aux paramètres du dispositif (12) de mémorisation.
